(19) Europäisches Patentamt
European Patent Office
Office européen des brevets

(11) Veröffentlichungsnummer: **0 203 505**
**B1**

# (12) EUROPÄISCHE PATENTSCHRIFT

(45) Veröffentlichungstag der Patentschrift: **24.05.89**

(51) Int. Cl.⁴: **C 09 B 62/095**, C 09 B 62/515, D 06 P 1/38

(21) Anmeldenummer: **86106872.4**

(22) Anmeldetag: **21.05.86**

## (54) Disazometallkomplexfarbstoffe.

(30) Priorität: **31.05.85 DE 3519551**

(43) Veröffentlichungstag der Anmeldung: **03.12.86 Patentblatt 86/49**

(45) Bekanntmachung des Hinweises auf die Patenterteilung: **24.05.89 Patentblatt 89/21**

(84) Benannte Vertragsstaaten: **CH DE FR GB LI**

(56) Entgegenhaltungen:
**EP-A- 0 126 025**
**EP-A- 0 134 193**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 203 505 B1

ACTORUM AG

**Beschreibung**

1. Gegenstand der vorliegenden Erfindung sind Farbstoffe der Formel

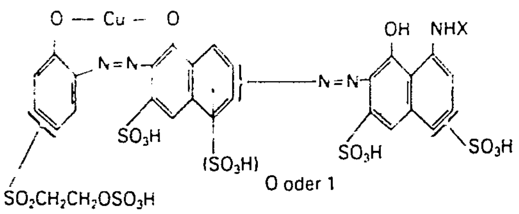

(1)

worin

X = Rest eines gegebenenfalls weiter substituierten Monofluorpyrimidins,
insbesondere solche mit
X =

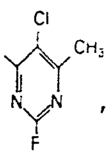 , 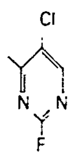 , 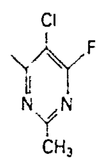

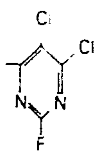 , 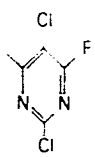 oder Gemisch aus vorzugsweise

40–96 Mol-% 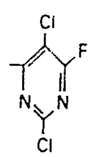 und

60–4 Mol-% 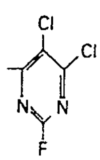

sowie deren Verwendung zum Färben und Bedrucken von Hydroxylgruppen oder Amidgruppen enthaltenden und die so gefärbten oder bedruckten Materialien.

Geeignete Reste X sind beispielsweise:

2-Fluor-4-pyrimidinyl-, 2-Fluor-5,6-dichlor-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 5-Chlor-6-chlormethyl-2-fluor-4-pyrimidinyl-, 2-Fluor-5-brom-6-methyl-4-pyrimidinyl-, 2-Fluor-5-brom-6-chlormethyl-4-pyrimidinyl-, 2-Fluor-6-methyl-4-pyrimidinyl-, 2-Fluor-5-chlor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbonmethoxy-4-pyrimidinyl-, 2-Fluor-5-brom-6-trifluormethyl-4-pyrimidinyl-, 2-Fluor-6-carbonmethoxy-4-pyrimidinyl-, 2-Fluor-6-cyan-pyrimidinyl-, 2-Fluor-5-sulfonamido-4-pyrimidinyl-, 2-Fluor-5-chlor-6-carbomethoxy-4-pyrimidinyl-, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methylsulfonyl-pyrimidinyl-4, 6-Fluor-5-phenyl-sulfonyl-pyrimidinyl-4.

Die Farbstoffe (1) erhält man beispielsweise durch Umsetzung von Farbstoffen der Formel

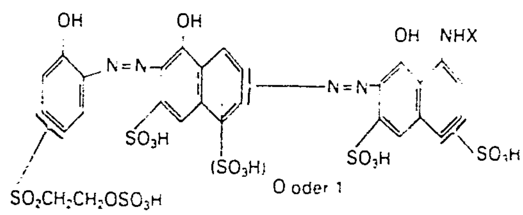

(2)

mit Kupfer-abgebenden Mitteln in üblicher Weise oder durch Kupplung der diazotierten Kupferkomplexe der Formel

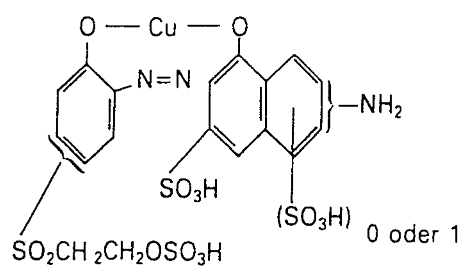

(3)

mit Kupplungskomponenten der Formel

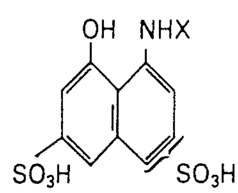

(4)

in schwach sauren bis schwach alkalischen Bereichen unter Erhalt der Metallkomplexgruppierung.

Die Farbstoffe (2) ihrerseits erhält man durch Diazotierung von Aminen der Formel

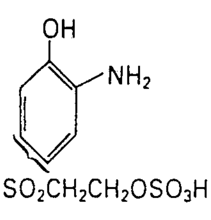

(5)

Kupplung mit Kupplungskomponenten der Formel

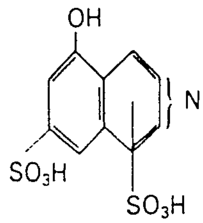

(6)

0 oder 1

Weiterdiazotierung mit Kupplung auf Kupplungskomponenten der Formel

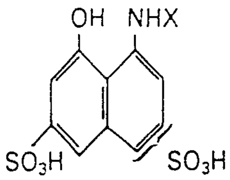

(7)

Die Verbindungen (7) erhält man in üblicher Weise durch Umsetzung der entsprechenden Amine mit Reaktivkomponenten der Formel

F-X (8)
(F = Fluor)

Geeignete Verbindungen (8) sind beispielsweise:

2,4-Difluor-6-methylpyrimidin, 2,6-Difluor-4-methyl-5-chlorpyrimidin, 2,4-Difluor-pyrimidin-5-ethyl-sulfon, 2,6-Difluor-4-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,6-Difluor-5-methyl-4-chlorpyrimidin, 2,6-Difluor-5-chlorpyrimidin, 2,4-Difluor-5-nitro-chlorpyrimidin, 2,4-Difluor-5-cyanpyrimidin, 2,4-Difluor-5-methyl-pyrimidin, 6-Trifluormethyl-5-chlor-2,4-difluorpyrimidin, 6-Phenyl-2,4-difluorpyrimidin, 6-Trifluormethyl-2,4-difluorpyrimidin, 2,4-Difluor-5-nitropyrimidin, 2,4-Difluor-5-trifluormethyl-pyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamidopyrimidin, 2,4-Difluor-6-carbomethoxypyrimidin, 2,4-Difluor-6-phenyl-pyrimidin, 2,4-Difluor-6-cyanpyrimidin, 2,4-Difluor-5-sulfonamidopyrimidin, 2,4-Difluor-5-chlor-6-carbomethoxy-pyrimidin, 5-Trifluormethyl-2,4-difluor-pyrimidin, 4,6-Difluor-5-chlorpyrimidin, 4,6-Difluor-5-trifluormethyl-pyrimidin, 4,6-Difluor-2-methyl-pyrimidin, 4,6-Difluor-5-chlor-2-methylpyrimidin, 4,6-Difluor-5-chlor-2-trifluormethyl-pyrimidin, 4,6-Difluor-2-phenylpyrimidin, 4,6-Difluor-5-cyan-pyrimidin, 4,6-Difluor-5-nitropyrimidin, 4,6-Difluor-5-methylsulfonyl-pyrimidin, 4,6-Difluor-5-phenyl-sulfonyl-pyrimidin.

Die Reaktivfarbstoffe der Formel (1) können isoliert und zu trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mon- und Dinatriumphosphat, getrocknet werden; vorzugsweise wird die Trocknung bei nicht zu hohen Temperaturen und unter vermindertem Druck vorgenommen.

Durch Zerstäubungstrocknung des ganzen Herstellungsgemisches kann man die erfindungsgemäßen trockenen Präparate auch direkt, d.h. ohne Zwischenisolierung der Farbstoffe herstellen.

Die Reaktivfarbstoffe der Formel (1) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichtsmengen beziehen sich auf die freie Säure. Die in den Beispielen angegebenen Farbkennzahlen beziehen sich auf Colour Index Hue Indication Chart (Indicator Numbers).

In der EP-A-134193 werden Kupferkomplex-Disazofarbstoffe mit einem Rest $-SO_2CH_2CH_2OSO_3H$ in der Diazokomponente des kupferhaltigen Molekülteils und Difluorpyrimidylrest in der metallfreien Kupplungskomponente beschrieben.

Beispiel 1

0,1 Mol des Disazofarbstoffs der Formel

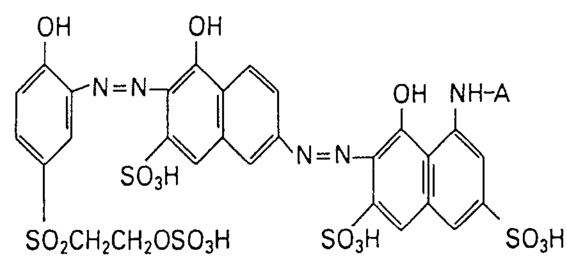

werden 1 l Wasser neutral gelöst. Man streut bei Raumtemperatur 28 g Kupfersulfat ($CuSO_4 \cdot 5H_2O$) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkelblaues Pulver, das sich leicht in Wasser löst und Baumwolle nach einem der für Reaktivfarbstoffe üblichen Färbeverfahren in marineblauen Tönen (28) färbt. Der Farbstoff entspricht der Formel

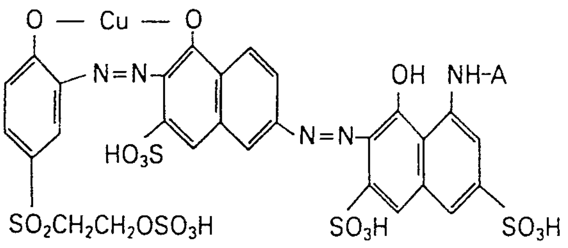

Der in diesem Beispiel verwendete Diazofarbstoff wird erhalten,indem man 2-Amino-4-β-sulfatoethylsulfonyl-phenol (Diazokomponente) diazotiert, bei pH 5,5–6,5 auf 2-Amino-5-oxy-naphthalin-7-sulfonsäure (I-Säure, Mittelkomponente) kuppelt, den resultierenden Aminoazofarbstoff diazotiert und bei pH 5,5–6,5 auf das Kondensationsprodukt kuppelt, das man durch Acylierung von 1-Amino-8-oxy-naphthalin-3,6-disulfonsäure (H-Säure, Endkomponente) mit einer Reaktivkomponente A–F (F = Fluor) erhält.

Nach den Angaben dieses Beispiels erhält man Farbstoffe, die Baumwolle in den in der letzten Spalte der folgenden Tabelle genannten Farbtönen färben, wenn man die folgenden Diazo-, Mittel-, End- und Reaktiv-Komponenten einsetzt.

In Beispiel 1 und der folgenden Tabelle werden folgende Abkürzungen verwendet:

Reaktivkomponente A–F 71,8 Mol-% 4,6-Difluor-2,5-dichlorpyrimidin
28,2 Mol-% 2,4-Difluor-5,6-dichlorpyrimidin
B–F 62 Mol-% 4,6-Difluor-2,5-dichlorpyrimidin
38 Mol-% 2,4-Difluor-5,6-dichlorpyrimidin
C–F 95,9 Mol-% 4,6-Difluor-2,5-dichlorpyrimidin
4,5 Mol-% 2,4-Difluor-5,6-dichlorpyrimidin

| Beispiel | Diazo- | Mittel- | End- | Reaktivkomponente | Farbton |
|---|---|---|---|---|---|
| 2 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 2,4-Difluor-5,6-dichlor-pyrimidin | marineblau (28) |
| 3 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 4,6-Difluor-2,5-dichlor-pyrimidin | marineblau (28) |
| 4 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 2,6-Difluor-5-chlor-pyrimidin | marineblau (28) |
| 5 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 2,4-Difluor-5-chlor-6-methyl-pyrimidin | marineblau (28) |
| 6 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 2,4-Difluor-5-chlor-6-trichlormethyl-pyrimidin | marineblau (28) |
| 7 | 2-Amino-4-β-sulfatoethyl-sulfonylphenol | 2-Amino-5-oxy-naphthalin-7-sulfonsäure | 1-Amino-8-oxy-naphthalin-3,6-disulfonsäure | 4,6-Difluor-5-chlor-2-methyl-pyrimidin | marineblau |
| 8 | 2-Amino-4-β-sulfatoethyl-sulfonylphenol | 2-Amino-5-oxy-naphthalin-1,7-disulfonsäure | 1-Amino-8-oxy-naphthalin-3,6-disulfonsäure | A–F | rotstichig marine (38) |
| 9 | 2-Amino-4-β-sulfatoethyl-sulfonylphenol | 2-Amino-5-oxy-naphthalin-1,7-disulfonsäure | 1-Amino-8-oxy-naphthalin-3,6-disulfonsäure | B–F | rotstichig marine (38) |
| 10 | 2-Amino-4-β-sulfatoethyl-sulfonylphenol | 2-Amino-5-oxy-naphthalin-1,7-disulfonsäure | 1-Amino-8-oxy-naphthalin-3,6-disulfonsäure | C–F | rotstichig marine (38) |
| 11 | 2-Amino-4-β-sulfatoethyl-sulfonylphenol | 2-Amino-5-oxy-naphthalin-1,7-disulfonsäure | 1-Amino-8-oxy-naphthalin-3,6-disulfonsäure | 4,6-Difluor-5-chlor-pyrimidin | rotstichig marine (38) |
| 12 | 2-Amino-5-β-sulfatoethyl-sulfonylphenol | 2-Amino-5-oxy-naphthalin-7-sulfonsäure | 1-Amino-8-oxy-naphthalin-3,6-disulfonsäure | A–F | marineblau (28) |
| 13 | 2-Amino-5-β-sulfatoethyl-sulfonylphenol | 2-Amino-5-oxy-naphthalin-7-sulfonsäure | 1-Amino-8-oxy-naphthalin-3,6-disulfonsäure | B–F | marineblau (28) |
| 14 | 2-Amino-5-β-sulfatoethyl-sulfonylphenol | 2-Amino-5-oxy-naphthalin-7-sulfonsäure | 1-Amino-8-oxy-naphthalin-3,6-disulfonsäure | C–F | marineblau (28) |
| 15 | 2-Amino-5-β-sulfatoethyl-sulfonylphenol | 2-Amino-5-oxy-naphthalin-7-sulfonsäure | 1-Amino-8-oxy-naphthalin-3,6-disulfonsäure | 2,4-Difluor-5-chlor-6-methyl-pyrimidin | marineblau (28) |

| Beispiel | Diazo- | Mittel- | End- | Reaktivkomponente | Farbton |
|---|---|---|---|---|---|
| 16 | 2-Amino-4-β-sulfatoethyl-sulfonylphenol | 2-Amino-5-oxy-naphthalin-7-sulfonsäure | 1-Amino-8-oxy-naphthalin-4,6-disulfonsäure | A–F | marineblau (28) |
| 17 | 2-Amino-4-β-sulfatoethyl-sulfonylphenol | 2-Amino-5-oxy-naphthalin-7-sulfonsäure | 1-Amino-8-oxy-naphthalin-4,6-disulfonsäure | B–F | marineblau (28) |
| 18 | 2-Amino-4-β-sulfatoethyl-sulfonylphenol | 2-Amino-5-oxy-naphthalin-7-sulfonsäure | 1-Amino-8-oxy-naphthalin-4,6-disulfonsäure | C–F | marineblau (28) |
| 19 | 2-Amino-5-β-sulfatoethyl-sulfonylphenol | 2-Amino-5-oxy-naphthalin-7-sulfonsäure | 1-Amino-8-oxy-naphthalin-3,6-disulfonsäure | 2,4-Difluor-5-Chlor-pyrimidin | marine (28) |
| 20 | 2-Amino-4-β-sulfatoethyl-sulfonylphenol | 2-Amino-5-oxy-naphthalin-7-sulfonsäure | 1-Amino-8-oxy-naphthalin-4,6-disulfonsäure | 2,4-Difluor-6-chlor-6-methyl-pyrimidin | marine (28) |
| 21 | 2-Amino-4-β-sulfatoethyl-sulfonylphenol | 2-Amino-5-oxy-naphthalin-1,7- | 1-Amino-8-oxy-naphthalin-4,6-disulfonsäure | A–F | rotstichig marine (38) |
| 22 | 2-Amino-4-β-sulfatoethyl-sulfonylphenol | 2-Amino-5-oxyx-naphthalin-1,7- | 1-Amino-8-oxy-naphthalin-4,6-disulfonsäure | B–F | rotstichig marine (38) |
| 23 | 2-Amino-4-β-sulfatoethyl-sulfonylphenol | 2-Amino-5-oxy-naphthalin-1,7- | 1-Amino-8-oxy-naphthalin-4,6-disulfonsäure | C–F | rotstichig marine (38) |
| 24 | 2-Amino-5-β-sulfatoethyl-sulfonylphenol | 2-Amino-5-oxy-naphthalin-1,7-disulfonsäure | 1-Amino-8-oxy-naphthalin-4,6-disulfonsäure | A–F | rotstichig marine (38) |
| 25 | 2-Amino-5-β-sulfatoethyl-sulfonylphenol | 2-Amino-5-oxy-naphthalin-1,7-sulfonsäure | 1-Amino-8-oxy-naphthalin-4,6-disulfonsäure | B–F | rotstichig marine (38) |
| 26 | 2-Amino-5-β-sulfatoethyl-sulfonylphenol | 2-Amino-5-oxy-naphthalin-1,7-sulfonsäure | 1-Amino-8-oxy-naphthalin-4,6-disulfonsäure | C–F | rotstichig marine (38) |
| 27 | 2-Amino-5-β-sulfatoethyl-sulfonylphenol | 2-Amino-8-oxy-naphthalin-6-sulfonsäure | 1-Amino-8-oxy-naphthalin-4,6-disulfonsäure | A–F | blau (15) (D= |

Beispiel 28

a) Reaktivkomponente A–F

In einem Rührkolben mit Rückflusskühler werden

2180 g Tetrachlorpyrimidin (10 mol)
924 g Natriumfluorid (22 mol)
1050 g Sulfolan 3,5 h zum Sieden erhitzt.

Die Temperatur im Reaktionsgemisch fällt im Laufe der Reaktion von 200 auf ca. 170 °C. Nach der Reaktion werden aus dem Rührkolben bei 18 mbar 1520 g bei einer Siedetemperatur bis zu 150 °C abdestilliert. Dieses Destillat wird rektifiziert:

1) Kp 116–118 °C 443 g $n^{=\circ}$ : 1,4402
2) Kp 119–156 °C 109 g $n^{=\circ}$ : 1,4542
3) Kp 157–160 °C 605 g $n^{=\circ}$ : 1,4965
4) Kp 161 °C 330 g

Die Fraktrionen 1) und 2) enthalten Trifluorchlorpyrimidin. Der über 160 °C siedende Anteil besteht aus Monofluortrichlorpyrimidinen, Tetrachlorpyrimidin und Sulfolan.

Die Fraktion 3) enthält 28,2% 2,4-Difluor-5,6-dichlor-pyrimidin und 71,8% 4,6-Difluor-2,5-dichlorpyrimidin.

b) Reaktivkomponente B–F

2180 g Tetrachlorpyrimidin, 924 g Natriumfluorid und 1050 g Sulfolan werden 8 h auf 150 °C erhitzt. Durch Analyse des Reaktionsgemisches durch Kapillar-GC findet man folgende Zusammensetzung (Angabe in Molprozent).

| | |
|---|---|
| Tetrachlorpyrimidin | 39,5 |
| Monofluortrichlorpyrimidin | 44,9 |
| 2,4-Difluor-5,6-dichlorpyrimidin | 4,6 |
| 4,6-Difluor-2,5-dichlorpyrimidin | 7,3 |
| 2,4,6-Trifluor-5-chlorpyrimidin | 1,4 |

Der Reaktionsansatz wird nach den Angaben von Beispiel 32a) aufgearbeitet. Man erhält dabei ein Isomerengemisch von 38% 2,4-Difluor-5,6-dichlorpyrimidin und
62% 4,6-Difluor-2,5-dichlorpyrimidin

c) Reaktivkomponente C–F

155 g eines Gemisches aus 68,8% 4,6-Difluor-2,5-dichlor-pyrimidin und 31,2% 2,4-Difluor-5,6-dichlorpyrimidin läßt man einen Tag im Eisschrank stehen. Die sich dabei abscheidenden Kristalle werden über eine Glasfritte abgesaugt. Der feste Rückstand und das Filtrat weisen dann folgende Zusammensetzungen auf:

| | 4,6-Difluor-2,5-dichlor-pyrimidin | 2,4-Difluor-5,6-dichlor-pyrimidin |
|---|---|---|
| a) Rückstand 74,5 g | 87,4% | 12,6% |
| b) Filtrat 78,1 g | 52,6% | 47,4% |

c) wird der feste Rückstand (a) mit kaltem Cyclohexan vermischt und wieder abgesaugt, so steigt der Gehalt an 4,6-Difluor-2,5-dichlor-pyrimidin von 87,4% auf 95,5%. Der Schmelzpunkt liegt zwischen 30 und 35 °C.

## Patentansprüche

1. Farbstoffe der Formel

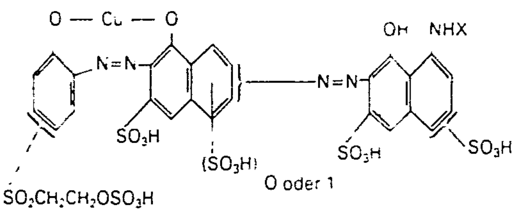

0 oder 1

worin

X = Rest eines gegebenenfalls weiter substituierten Monofluorpyrimidins.

2. Farbstoffe des Anspruchs 1 mit X =

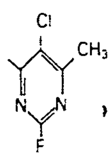 , 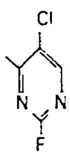 , 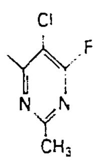

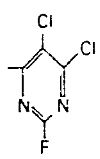 , 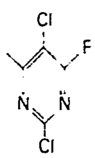 oder Gemisch aus vorzugsweise

40–96 Mol-% 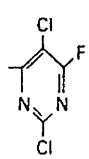 und

60–4 Mol-% 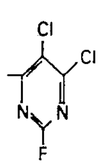

3. Verwendung der Farbstoffe der Ansprüche 1 bis 2 zum Färben und Bedrucken von Hydroxylgruppen oder Amidgruppen enthaltenden Materialien.

4. Mit den Farbstoffen der Ansprüche 1 bis 2 gefärbte oder bedruckte Hydroxylgruppen oder Amidgruppen aufweisende Materialien.

## Claims

1. Dyestuffs of the formula

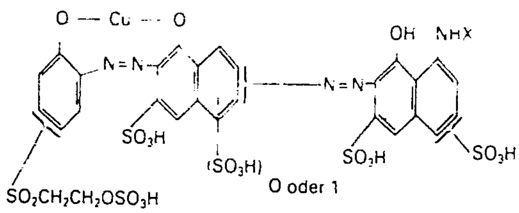

0 oder 1

wherein

X = radical of an optionally further substituted monofluoropyrimidine.

2. Dyestuffs of claim 1 where X =

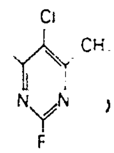 , 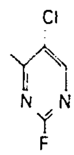 , 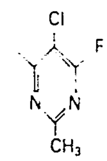

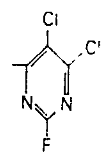 , 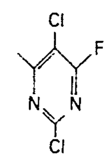 or mixture of preferably

40–96 mol-% of 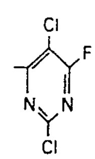 and

60–4 mol-% of 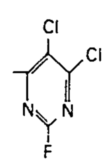

3. Use of the dyestuffs of claims 1 and 2 for dyeing and printing hydroxyl- or amido-containing materials.

4. Hydroxyl- or amido-containing materials dyed or printed with the dyestuffs of claims 1 and 2.

**Revendications**

1. Colorants de formule

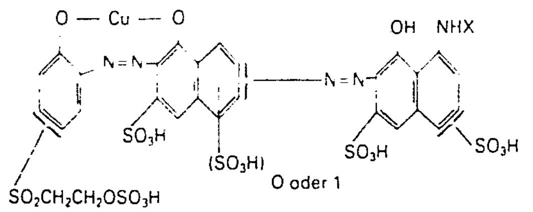

dans laquelle
X = reste d'une monofluoropyrimidine davantage substituée, le cas échéant.

2. Colorants suivant la revendication 1, dans lesquels X =

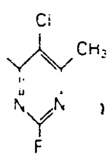 , 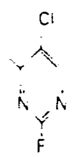 , 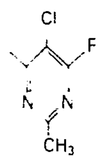 ,

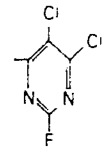 , 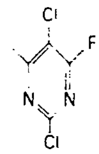 ou un mélange formé, de préférence,

de 40 à 96 moles-% de 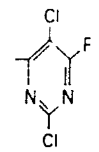 et

de 60 à 4 moles-% de 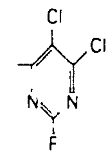

3. Utilisation des colorants suivant les revendications 1 ou 2 pour la teinture et l'impression de matières contenant des groupes hydroxyle ou des groupes amido.

4. Matières présentant des groupes hydroxyle ou des groupes amido teintes ou imprimées avec les colorants suivant les revendications 1 et 2.